# EUROPEAN PATENT SPECIFICATION

(11) **EP 1 683 766 B1**
(45) Date of publication and mention of the grant of the patent: **05.08.2009**
(21) Application number: 04766955.1
(22) Date of filing: 23.09.2004
(51) Int. Cl.: C02F 9/14, C05F 3/00

(54) **METHOD OF REDUCING THE POLLUTION LOAD OF PURINES**
VERFAHREN ZUR VERRINGERUNG DER SCHADSTOFFBELASTUNG VON PURINEN
PROCEDE DE REDUCTION DE LA CHARGE POLLUANTE DES PURINS

(30) Priority: 24.09.2003 ES 200302214
(43) Date of publication of application: 26.07.2006
(73) Proprietor: Sener Grupo de Ingenieria, S.A., 28760 Tres Cantos (Madrid) (ES)
(72) Inventor: ANGULO ARAMBURU, Jeronimo, E-28760 TRES CANTOS (Madrid) (ES)
(74) Representative: Carpintero Lopez, Francisco
(86) International application number: PCT/ES2004/000417
(87) International publication number: WO 2005/028382

(56) References cited:
- ES-A- 2 153 739
- ES-A- 2 157 779
- US-A- 4 710 300

## Description

### FIELD OF THE INVENTION

The invention refers, in general, to the treatment of manure effluents. More specifically, the invention refers to a method for reducing the pollutant load of manure effluents by biodigestion and distillation.

Traditionally, waste from animal farms, specially manure effluents from pigs and cattle, have been used as fertilizers because of their high contents of organic matter, nitrogen, phosphorus, potassium and other nutrients for plant crops.

However, intensive livestock farming, which has reduced the cost of animal production, has also resulted in the accumulation of manure effluents in some geographical areas, above limits that can be absorbed by neighbouring land, with undesirable consequences such as the pollution of surface and ground waters and nitrification and salinization of the soil. Under these circumstances, manure becomes a surplus material that must be treated as a waste.

Transport of the surplus manure, which normally contains more than 90% water, to geographical areas without intensive livestock farming for use as fertilizer is not profitable and several processes have been aimed at treating manures, converting them into clean water that can be reused or discharged into public watercourses. Also, attempts have been made to reduce certain unwanted elements in the manure that cause unpleasant odours or can be harmful to the land and waters (nitrogen and phosphorus), if used for irrigation or fertilization.

### BACKGROUND OF THE INVENTION

Treating the manure to obtain water that can be reused or discharged into a public watercourse, can be carried out by a combination of physicochemical and biological treatments both aerobic and anoxic, as described in the patent ES 2151389 (ROS ROCA S.A.) and the patent application WO 97/47561 (Biospecific Systems S.L.). Methods for separating solids and for distilling volatile compounds (ammonia, CO₂, etc.), have also been described, treating the distillation bottoms with calcium oxide and carbonating them to separate a precipitate and clear water (J. Kristoufek US 4710300). However, these methods are complicated and costly and do not easily produce a water that fulfils all the requirements to be dumped into a public watercourse.

Other methods are based on concentrating the manure solids by evaporating off the water and drying the concentrate, obtaining a solid fertilizer, which is transportable and can be applied to the land at any time or place, where there is not a surplus of manure effluents. These methods are very costly since a large amount of energy is required in the evaporation and drying process, and the evaporated water usually carries volatile fatty acids and ammonia, leading to gaseous emissions (or liquid ones if the evaporated water is condensed).

To avoid these limitations, methods have been developed that use cogeneration energy to reduce the operation costs (EP 0805130, SICOGESA EXPLOTACIÓN S.A.; and EP 1138185, Universidad de Santiago de Compostela). The method, disclosed in the Spanish patent ES 2157779 (Servicios de Gestión Tecnológica S.A.), combines anaerobic digestion, followed by centrifugation, neutralization with acid, evaporation and drying, with a cogeneration system. A stable fertilizer that can be stored and transported is obtained, as well as, a water condensate. This water, having a very low content in ammonia and in volatile organic acids, responsible for the odour, may be reused or discharged.

Simpler methods have also been designed that do not require energy for water evaporation, such as sterilization of the manures followed by the precipitation of ammonia nitrogen as struvite (magnesium ammonium phosphate) which is separated by sedimentation or filtration (EP 1041058, ROS ROCA S.A.); or, by bubbling hot air through the sterilized manure for stripping the ammonia (EP 1041057, ROS ROCA S.A.). These processes, designed to reduce the nitrogen content of the manure, do not eliminate the volatile organic acids, resulting in odorous emissions in the treated manure, in the ammonia stripping air or in the solutions of ammonia salts obtained, and do not reduce the phosphorus content of the manure.

Hence, in the state of the art, there is still the need to optimize the treatment of manure effluents in areas of surplus production by a simple and not too costly process that reduces the contents of nitrogen, phosphorus and volatile organic acids in the manure and that optimizes, both the recovery of the fertilizer nutrients and the energy efficiency.

### OBJECT OF THE INVENTION

An object of the present invention is, therefore, to provide a new and simple method for reducing the nitrogen pollutant load of manure effluents so that the treated manures can be used as irrigation water in areas near to the animal farms, without saturating the land capacity.

Another objective of the present invention is also to optionally reduce the phosphate content in cases in which the land or surface and ground waters are at risk of exceeding (or have already exceeded) the maximum permitted phosphorus levels.

Another objective of the invention is to reduce the unpleasant odours of the manures, and more in particular those characteristic of excrements caused by organic acids with more than 3 carbon atoms (propionic, butyric, isobutyric, etc.), which affect living areas close to agriculture exploitations, that are being fertilized with manure.

Another objective of the invention is to be self-sufficient in energy, which is provided by a cogeneration unit that produces electrical and thermal energy from the biogas generated in the anaerobic biodigestion step.

Finally, another objective of the invention is to optimize the recovery of the fertilizer nutrients, contained in the manure, and the energy efficiency.-This optimization is achieved by combining the method of the invention, which produces a partial reduction of pollutants, with one of the other methods described in the state of the art, which eliminates almost 100% of the pollutants.

### DETAILED DESCRIPTION OF THE INVENTION

The present invention provides a method for reducing the pollutant load of the manures **characterized in that** it comprises the steps as defined in claim 1.

Hence, the essence of the method of the invention is **characterized in that** the manure is submitted to anaerobic biodigestion, to separation by centrifugation of the solid part and to distillation of the ammonia contained in the digested manure, and in that the energy from the biogas generated in the anaerobic biodigestion is used to supply the energy requirements of the whole process.

This method can be carried out continually or discontinuously, preferably in continuous mode.

Anaerobic biodigestion generally reduces the contents of volatile organic acids having three or more carbon atoms, from values of around 10,000 ppm to less than 50 ppm, in other words, to concentrations near to the odour detection threshold. Similarly, biodigestion transforms organic nitrogen into ammonia nitrogen in high percentages, usually more than 70%. Since the concentration of ammonia nitrogen is usually 75% of the total nitrogen in the manure, with biodigestion more than 90% of the nitrogen is converted into ammonia form, and is separable by the subsequent distillation process that characterizes the invention.

Similarly, biodigestion transforms the volatile organic matter into biogas, which is a mixture of methane and carbonic anhydride, generally with methane contents of 60-70% by volume, which provides an energy source to supply the energy requirements of the method. The biogas generated in the biodigestion process, in amounts generally between 10 and 25 Nm³ per m³ of manure, is used to generate the thermal and electrical energy required for the treatment method of manures of the present invention.

In a specific embodiment of the invention, the cogeneration unit that uses the biogas produced in the biodigestion of step (a) comprises, at least, a gas engine or a gas turbine connected to an electrical generator.

In a specific embodiment, the biogas produced in step (a) is used in this cogeneration unit as a fuel supplemented by a fossil fuel such as natural gas.

Hence, the biogas produced in step (a) is used as a fuel, optionally supplemented by a fossil fuel such as natural gas, in a cogeneration unit that produces electricity and heat to supply the electricity and thermal requirements of the biodigestion of step (a), the separation of step (b), the distillation of step (c) and of the cogeneration process itself.

As mentioned, the cogeneration unit can be a gas turbine or a gas engine coupled to an electrical generator. In the case of a gas turbine, only the heat from exhaust gases produced is used. In the case of the gas engine, in addition to the heat from exhaust gases, the thermal energy from the engine's cooling water is also used. In both cases the heat energy is recovered as steam, hot water or another heat carrier fluid.

It is known that biodigestion can be carried out in mesophilic conditions (around 37°C) or thermophilic conditions (around 55°C), with retention times in the digestors of around 20 days in the first case and 15 days in the second case. Both procedures are applicable in the case of the present invention.

Hence, in a preferred embodiment of the method of the invention, the anaerobic biodigestion in step (a) is carried out in mesophilic conditions, preferably at temperatures between 30 and 45 °C and with retention times between 10 and 30 days.

In another preferred embodiment, the anaerobic biodigestion of step (a) is carried out in thermophilic conditions, preferably between 45 and 65 °C and with retention times between 8 and 20 days.

Biodigestion of the manure takes place in a more stable way, also producing large amounts of biogas when the manures are combined with other wastes that increase the C/N ratio and the organic matter digestible of the manure. Hence, for example, it is favourable to combine pig and cattle manures or to add sludges from effluent water treatment plants, slaughterhouse wastes, poultry farm litter (chicken, quails, etc.), food industry wastes, etc. With the present invention, the addition of these products between 0.5 and 10% by weight can increase the amount of biogas generated by up to 50%.

Hence, in a specific embodiment of the method of the invention, the anaerobic digestion of step (a) corresponds to a codigestion of the manure with other wastes from the farming, food or water-treatment industry such as slaughterhouse wastes, wastes from the manufacture of vegetable oils, sugar or beer, from animal farms other than pig farms, from the processing of milk products, fruit, vegetables, fish, etc. in amounts generally ranging from 0.5 to 30% by weight.

By separating the solids after anaerobic biodigestion and before distillation. In this way, the insoluble material from the manure is also digested (solubilization, elimination of odours, conversion of organic nitrogen to ammonia nitrogen, etc.); and, since the solid matter is separated before distillation, fouling and deposits in the distillation equipment are prevented.

In one embodiment of the method of the invention, this method comprises, before step (a), an additional step for separating the solid material by filtration, centrifugation or decanting the manure.

In accordance with the invention separation of the solid matter is carried out after the biodigestion of step (a) and before the distillation of step (c); by centrifuging the biodigested manure. Hence, by centrifugation a cake is separated off that usually represents 10-15% by weight of the initial manure, with a solid matter contents generally between 20 and 30% by weight. However, this cake, that can be dried or composted for use as a fertilizer, generally retains 60-70% of the phosphates contained in the initial manure.

The distillation (c) of the clarified liquid manure obtained in step (b) is carried out in such a way that a small amount of the product is collected as distillate, between 2 and 10% by weight of the initial fed manure. This distillate, which is typically a solution with 5-20% of ammonia by weight, retains a high proportion of ammonia from the digested manure, generally more than 95%, in carbonated form, which represents more than 90% of total nitrogen that the manure initially contained.

Hence, in accordance with the method of the invention, the distillation in step (c) is carried out in a vaporization or distillation equipment so that a small fraction of the manure is distilled, between 2 and 10% by weight, which contains most of the nitrogen from the manure as an aqueous carbonated ammonia solution. On the other hand, if an acid is added, such as, for example, sulphuric, nitric or hydrochloric acid during condensation of the water and ammonia or as a rinsing liquid for noncondensates, nitrogen is collected as an aqueous solution of the ammonia salt of the corresponding acid.

According to another embodiment of the process, the clarified liquid manure obtained in step (b), can be treated with an alkaline or alkaline-earth hydroxide (for example with 2-4% of sodium hydroxide) before the distillation in step (c), which permits the distilled ammonia to be obtained as an ammonium hydroxide solution (usually with 10-20% of the ammonia content by weight), instead of obtaining a carbonated ammonia solution, such as that described previously.

Consequently, in a specific embodiment of the method of the invention, before the distillation in step (c) a base is added that could correspond to an alkaline or alkaline-earth hydroxide, in amounts usually between 0.1 and 1.0 Kmol/m³ of the digested manure.

The ammonia solution obtained in the distillation process, and the cake containing the phosphates produced in the separation of the solid matter (that generally represents less than 15% by weight of the initial manure), can be used for the manufacture of fertilizers or composts, to be applied in agriculture farming areas not saturated by these nutrients.

In other words, with the method of the invention the nitrogen content of a manure can be reduced by more than 90% and optionally the phosphates by more than 60%, as shown previously., The final liquid manure, thus obtained, has a lower fertilizer load, and may be used as irrigation water or as a diluted fertilizer, having substantially lower emission levels of unpleasant odours than the initial manure, and does not have the initial characteristic odour of excrement it had previously.

Another embodiment of the invention consists in combining the simple method described previously to reduce the manure contaminants with a method of evaporation and drying with cogeneration, as described in the Spanish patent ES 2157779, such that:
- the thermal and electrical energy required for the combined method of the invention is obtained from a cogeneration unit which uses the biogas generated from step (a) together with a fossil fuel;
- the ammonia solution obtained in the distillation of step (c) is added to the clarified manure, before the neutralization, concentration and drying thereof;
- the solid material separated in the separation of step (b) is added to the products to be dried;
- the combined method obtains three products: **(1)** A liquid manure with a lower pollutant load to be used as irrigation water or as diluted liquid fertilizer; ***(2)*** a process water or irrigation water obtained almost free of pollutants, and ***(3)*** a solid fertilizer.

With this embodiment, it is possible to optimize the management of the surplus manure by combining drying processes which treat one part of the manure recovering 100% of the fertilizer contents as a solid fertilizer, and the method of the invention, that reduces the fertilizing load of the rest of the manure. By this combined method, it is possible to add more manure to the land and to avoid unpleasant odours.

Therefore, in a specific embodiment of the invention, the method is characterized in that, after the biodigestion step (a) and the separation step of the solid matter (b), a fraction of the clarified liquid manure obtained in step (b) is submitted to a drying process that comprises the following steps:
(d) fixation of the ammonia contained in this fraction of the clarified liquid manure by acidification, preferably with sulphuric acid at a pH of between 2 and 7;
(e) concentration of the clarified liquid manure acidified in step (d), obtaining a syrup containing preferably between 10 and 30% by weight of solid matter; and
(f) drying of the syrup obtained in step (e) to obtain a powder with a moisture content generally between 1 and 20% by weight.

In a specific embodiment, as described previously, this method is characterized in that the biogas produced in step (a) is used as a fuel in one cogeneration unit supplemented by a fossil fuel such as natural gas to supply the thermal and electrical energy requirements of all the steps and of the cogeneration itself.

Hence, the biogas produced in step (a) is used as a fuel, supplemented by a fossil fuel such as natural gas, in a cogeneration unit that produces electricity and heat to supply the thermal requirements of the biodigestion of step (a), the distillation of step (c), the concentration of step (e) and the drying of step (f), for example.

In another embodiment, this method is characterized in that the ammonia solution obtained after the distillation step (c) is added to the other fraction of clarified liquid manure before the ammonia fixation step (d); and in that the solid material separated in step (b) is added to the syrup obtained in step (e) before the drying step (f).

Finally, in another specific embodiment, this process is characterized in that the powder obtained in step (f) is agglomerated to improve its handling and application by processes such as granulation or pelletization.

### DESCRIPTION OF THE FIGURES

### Figure 1

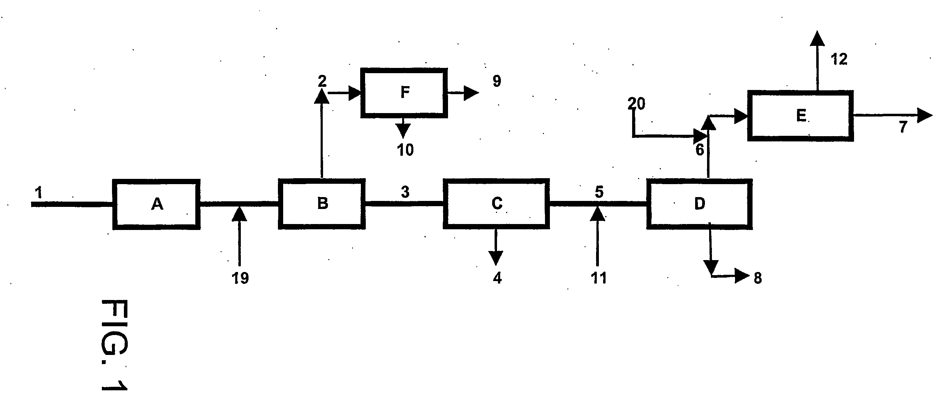

Figure 1 of the annex illustrates the method of the invention, as described as follows:

The manure **(1)** is loaded into the storage facility (A), at the entrance of which there is a grill to separate the coarse solids and a shredder to homogenize the manure. The manure is continually pumped into the anaerobic biodigestion reactors (B) where the biogas **(2)** and the biodigested manure **(3)** are produced, and the solid matter of the biodigested manure is separated off as a sludge **(4)** rich in phosphates, by centrifugation in (C). The clarified liquid manure **(5),** is submitted to a distillation process in (D), producing a distillate **(6)** that condenses in (E), producing an ammonia solution **(7)** containing the ammonia in carbonated form.

Optionally, to the distillate **(6)** a dilute acid is added **(20)** so that as the pH of the ammonia solution stream **(7)** drops below 7, the ammonia is retained as an ammonia salt of the corresponding acid and the CO₂ is released **(12).**

Most of the clarified liquid manure (5), after separating the solid matter of the biodigested manure, is obtained as distillation bottoms which constitute the final liquid manure with a lower pollutant load (8).

The thermal self-sufficiency of the method is achieved by feeding the biogas **(2)** to a cogeneration unit such as a motogenerator (F) from which electrical energy is obtained (**9**) for all the installations. Thermal energy (10) is also obtained as steam for the distillation in (D) and as of hot water from the engine jackets for the biodigestion in (B).

The energy efficiency is improved still further by exchanging the heat contained in the final liquid manure **(8)**, with the clarified liquid stream **(5)** in a heat exchanger.

In another embodiment of the invention, an alkaline or alkaline-earth hydroxide **(11)**, is added to the stream of clarified liquid manure **(5)**, so that in (E) an ammonia solution **(7)** is obtained that contains ammonia in the ammonium hydroxide form. A stream of CO₂ (12), is also produced which can eventually be washed with an acidic solution, preferably sulphuric acid solution, to recover the ammonia still retained in this CO₂ stream.

In another embodiment of the method, separation of the solid matter is carried out before the biodigestion in (B).

In another embodiment of the method, before the biodigestion the manure is mixed with other wastes **(19),** which enhances the anaerobic digestion and increase the amount of biogas.

### Figure 2

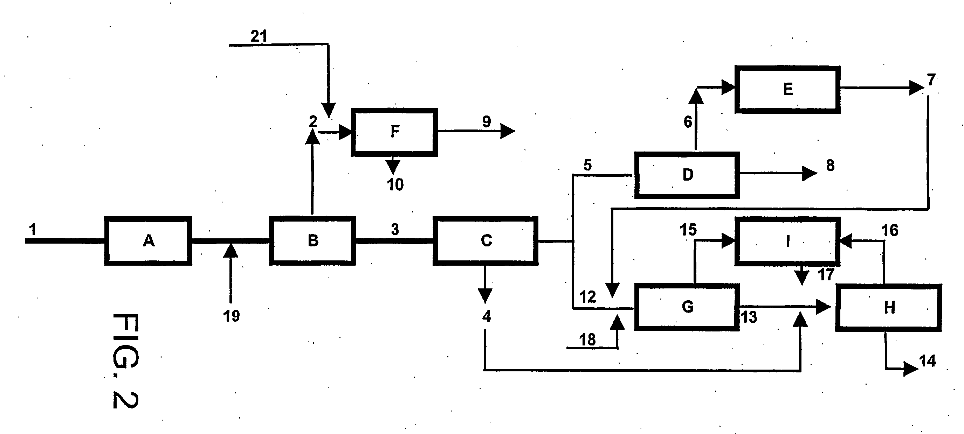

Figure 2 illustrates another embodiment of the method of the invention that is combined with a vaporization and drying system with cogeneration. Manure **(1)** is loaded into (A), after first breaking it down and shredding it.

The broken down and shredded manure is continually pumped into the biodigesters (B), producing a biogas **(2)** and the biodigested manure **(3)** from which the solid matter is separated off in the form of sludge **(4)** in (C).

The clarified liquid manure obtained after separation of the solid material in (C) is separated into two fractions, one of which, the stream **(5)**, is distilled as shown in figure 1. The other fraction, the stream **(12)**, is neutralized with acid **(18)**, preferably sulphuric, and is taken to an evaporator (G) The water vapour (15) from evaporator G is separated off and condensed in (I). The concentrate (13) from evaporator G is pumped to the dryer (H), where a dry fertilizing powder is formed (14) . Water vapour (16) from H is condensed in (I). The condensates (17) of the drying and evaporation processes can be used as process water or irrigation water.

The biogas (2) is mixed with the fossil fuel (21), generally natural gas, which is fed to motogenerators (F) that produce electrical energy (9) and thermal energy (10) in the form of hot water and steam. The hot water from the engine jacket and the steam generated with the exhaust gases of the motogenerators are used to provide heat to the biodigestion in (B), to distillation in (D), to evaporation in (G), and to drying in (H). The sludge **(4)** is added to the concentrate **(13)** in order to transform it into solid fertilizer.

The ammonia solution **(7)** is added to the fraction of clarified liquid manure, the stream **(12),** after which it is neutralized with acid **(18),** concentrated in (G) and dried in (H), recovering the ammonia nitrogen in the dry fertilizing powder **(14).**

In another embodiment of the method, before biodigestion the manure is mixed with other wastes **(19),** which enhances the anaerobic digestion and increase the amount of biogas produced.

### EXAMPLES

The examples described below are merely illustrative and the invention is not in any way limited to these applications.

### Example n° 1 (according to figure 1).

The manure to be treated comes from pig farms and has the following composition:

| | |
|---|---|
| Total dry matter: | 6.6% by weight |
| Volatile solids: | 4.5% by weight |
| COD: | 75,000 g/m³ |
| Total nitrogen: | 0.68% by weight |
| Ammonia nitrogen: | 0.15% by weight |
| Phosphorus (P): | 1.4 kg/m³ |
| Volatile organic acids C₃⁺: | 9,900 ppm |
| Density: | 1,080 kg/m³ |

A total of 12.5 t/h of the manure with the above analytical composition is continually pumped from the tanks (A) to the digestors (B), which consist of several stirred tanks working in parallel, with a total useful volume of 5000 m³, which are maintained at 35 °C, and the manure is circulated through heat exchangers fed with hot water from the cogeneration. The biodigestion produces 7,100 Nm³/day of biogas, containing 3,057 Kg/day of methane with a heating power of 1,770 kWh/h.

The digested manure **(3)** which overflows from the biodigestors is taken to a degasifying container where CO₂ is spontaneously emitted. This has the following composition:

| | |
|---|---|
| Total dry matter: | 4.1 % by weight |
| Volatile solids: | 1.8% by weight |
| Total nitrogen: | 0.70% by weight |
| Ammonia nitrogen: | 0.66% by weight |
| Volatile organic acids C₃⁺: | 33 ppm |

The degasified manure is fed to the centrifuge (C), which separates 1.5 t/h from a sludge containing 25% of total solid matter **(4)**. With this stream, 12.5 kg/h of nitrogen and 11.4 kg/h of phosphorus are separated.

The clarified liquid manure **(5)** obtained after centrifugation, which contains 73 kg of N/h, is continually pumped at a rate of 11.0 t/h to a distillation column (D) 600 mm in diameter and 20 metres high with 28 perforated plates. Before entering the column, the manure exchanges heat with the bottom of the column, and is heated to above 90°C. The bottom of the column is heated by a kettle with 4 kg/cm² of saturated steam produced by the boiler. A distillate of 600 kg/h, which contains 89 kg/h of ammonia (68 kg/h of N) is obtained.

The biogas **(2)** is supplied to a motogenerator (F) that produces 1.8 MWh/h of electrical energy which is partially used for the energy requirements of the process (approximately 200 kWh/h) and the rest is exported to the electricity network. Both, 1.8 t/h of steam at 4 kg/cm² from the exhaust gases and 1000 kWh/h as hot water at 85 °C from the jackets, supply the heat energy required for the distillation in (D) and the biodigestion in (B), respectively.

At the column bottom **(8),** 10.4 t/h of manure that contains 4 kg/h of nitrogen (5% of the initial amount) and 6.1 kg/h of P (35% of the initial amount), are sent to the tanks of treated manure, to be applied to farming land or used for irrigation.

### Example n° 2 (according to figure 1)

The manure from example n° 1 is mixed with 20% by weight of bleaching earth employed in decolouring vegetable oils **(19)** which is used as a conutrient in biodigestion of the manure. A total of 12.5 t/h of the mixture is processed as in example 1 in thermophilic conditions (55 °C) in biodigesters (B) with a total volume of 3,500 m³. The biogas production increases to 19,500 Nm³/day which provides an equivalent heat energy of 4,960 kWh/h.

The biogas **(2)** is fed to a motogenerator (F) which produces 1.8 MWh/h of electrical energy that is partly used to provide the energy required for the process (approximately 200 kWh/h) and the rest is exported to the electricity network. Both, 1.8 t/h of steam at 4 kg/cm² from the exhaust gases and 1000 kWh/h as hot water at 85 °C from the jackets, supply the heat energy required for the distillation in (D) and the biodigestion in (B), respectively.

Treatment of the digested manure is the same as in example n° 1, and obtains analogous results.

### Example n° 3 (according to figure 2)

A total of 25 t/h of the manure described in example 1 are fed to the biodigesters (B) with a 10,000 m³ capacity. The biodigestion produces 600 Nm³/h of biogas **(2)** with a heat content of 1,540 kWh/h.

Centrifugation in (C) produces 3 t/h of a sludge **(4)** which is sent to be dried in (H) and a clarified liquid manure which is divided into two equal streams, **(5)** and **(12).**

Stream **(5)** is pumped to the distillation area (D) as in example 1 obtaining from the bottom of the column 10.4 t/h of treated manure to be used as irrigation water. The 600 Kg/h of ammonia solution **(7)** distilled through the head return to the second stream of clarified liquid manure **(12)** which is acidified with sulphuric acid **(18)** at pH 4.5 and concentrated under vacuum in (G).

The product concentrated in (G) is a concentrated solution of 1.7 t/h with 20% of solid matter, which is mixed with the 3 t/h of the stream **(4)** and evaporated to dryness in a horizontal rotary dryer (H) heated by steam and hot air. The product **(14)** is a solid fertilizer in powder form with 5% of moisture content that can be used as such or in granule or tablet form. In this way, a total of 940 kg/h are obtained of a mineral organic fertilizer which has 35% organic matter and a nutrient composition of 15.7.5 (N, P₂O₅, K₂O).

The cogeneration unit (F) has 6 gas engines coupled to electrical generators fed with the biogas **(2)** produced in the biodigestion process (3.540 kWh/h) and with natural gas (**21**) (34,000 kWh/h), generating 15,000 kWh/h of electricity. The heat from the engine jackets (8,000 kWh/h) is used to heat the biodigesters (B) (500 kWh/h) and to concentrate the manure in (G) (7,500 kWh/h). The heat from the exhaust gases generates 6 t/h of steam of 4 Kg/cm² in a boiler, which are used in the dryer (H) and in the distillation process (D).

## Claims

1. Method for reducing the pollutant load of manures **characterized in that** it comprises the following steps:
(a) anaerobic biodigestion of the manure; and
(b) separation of the solid matter from the biodigested manure obtained in step (a) by centrifugation, and
(c) distillation of the clarified liquid manure obtained in step (b), producing a fraction of distillate between 2 and 10 % by weight of the initial manure, that contains most of the nitrogen from the initial manure as an aqueous carbonated ammonia solution; or alternatively as an ammonia salt solution of an acid when an acid is added to the distillate; or alternatively as an ammonium hydroxide solution when a base is added before the distillation to obtain at the bottom of the distillation column a final liquid manure with a lower pollutant load;
and **in that** the biogas produced in the biodigestion of step (a) is used in a cogeneration unit to supply the thermal energy and electrical energy requirements of all the steps and of the cogeneration itself.

2. Method according to claim 1, **characterized in that** the cogeneration unit that uses the biogas produced in the biodigestion of step (a) comprises at least a gas engine or a gas turbine coupled to an electrical generator.

3. Method according to claim 2, **characterized in that** the biogas produced in step (a) and used in this cogeneration unit is supplemented by a fossil fuel such as natural gas.

4. Method according to claims 1 to 3, **characterized in that** the anaerobic biodigestion of step (a) is carried out in mesophilic conditions, preferably at temperatures between 30 and 45 °C and with retention times between 10 and 30 days.

5. Method according to claims 1 to 3, **characterized in that** the anaerobic biodigestion of step (a) is carried out in thermophilic conditions, preferably between 45 and 65 °C and with retention times between 8 and 20 days.

6. Method according to the previous claims, **characterized in that** the anaerobic biodigestion of step (a) is a codigestion of the manure with other wastes from agriculture, food or water-treatment industry, such as slaughterhouse waste, waste from the manufacture of vegetable oil, sugar and beer production, from animal farms other than pig farms, from the processing of milk products, fruit, vegetables, fish, etc., in amounts generally between 0.5 and 30% by weight.

7. Method according to the previous claims **characterized in that** it comprises, before step (a), an additional step for separating the solid matter by filtration, centrifugation or decanting the manure.

8. Method according to previous claims **characterized in that** the acid added to the distillate collected overhead in step c) is selected from sulphuric, nitric of hydrochloric acid.

9. Method according to previous claims **characterized in that** the base added before the distillation of step (c) is selected from an alkaline and an alkaline-earth hydroxide, in amounts generally ranging from 0.1 to 1.0 kmol/m³ of digested manure.

10. Method according to the previous claims, **characterized in that** after the biodigestion step (a) and the separation step of the solid matter (b), a fraction of the clarified liquid manure obtained in step (b) is submitted to a drying process that comprises the following steps:
(d) fixation of the ammonia contained in this fraction of the clarified liquid manure by acidification, preferably with sulphuric acid at a pH of between 2 and 7;
(e) concentration of the clarified liquid manure acidified in step (d), obtaining a syrup containing preferably between 10 and 30% by weight of solid matter; and
(f) drying of the syrup obtained in step (e) to obtain a powder with a moisture content generally between 1 and 20% by weight.

11. Method according to claim 10, **characterized in that** the biogas produced in step (a) is used as a fuel in a cogeneration unit supplemented by a fossil fuel such as natural gas to supply the thermal and electrical energy requirements of all the steps and of the cogeneration itself.

12. Method according to claims 10 to 11, **characterized in that** the ammonia solution obtained after the distillation step (c) is added to the other fraction of the clarified liquid manure before the ammonia fixation step (d); and **in that** the solid matter separated in step (b) is added to the syrup obtained in step (e) before the drying step (f).

13. Method according to claims 10 to 12, **characterized in that** the powder obtained in step (f) is agglomerated to improve its handling and application by processes such as granulation and pelletization.

## Patentansprüche

1. Verfahren zum Reduzieren der Verschmutzungsbelastung von Dünger, **dadurch gekennzeichnet, daß** es die folgenden Schritte umfaßt:
a) Anerobe biologische Digestion des Düngers; und
b) Trennung der festen Stoffe von dem einer biologischen Digestion unterworfenen Dünger, der in Schritt (a) erhalten worden ist, durch Zentrifugierung, und
c) Destillieren des geklärten flüssigen Düngers, der in Schritt (b) erhalten worden ist, wobei eine Destillationsfraktion zwischen 2 und 10 Gewichtsprozent des ursprünglichen Düngers erzeugt wird, die den größten Teil des Stickstoffs aus dem ursprünglichen Dünger als eine wässrige, mit CO₂ versetzte Ammoniaklösung enthält; oder alternativ als eine Ammoniaksalzlösung einer Säure, wenn eine Säure dem Destillat hinzugefügt wird; oder alternativ als eine Ammoniumhydroxidlösung, wenn eine Base vor der Destillierung hinzugefügt wird, um am Boden der Destillationskolonne einen endgültigen flüssigen Dünger mit einer niedrigeren Verschmutzungsbelastung zu erhalten;
und wobei das Biogas, das in dem Schritt (a) der biologischen Digestion erzeugt worden ist, in einer parallelen Erzeugungseinheit verwendet wird, um die benötigte thermische Energie und elektrische Energie für alle Schritte und die parallele Erzeugung selbst bereitzustellen.

2. Verfahren nach Anspruch 1, **dadurch gekennzeichnet, daß** die parallele Erzeugungseinheit, die das Biogas verwendet, das in dem Schritt (a) der biologischen Digestion erzeugt worden ist, zumindest einen Gasmotor oder eine Gasturbine umfaßt, der bzw. die mit einem elektrischen Generator gekoppelt ist.

3. Verfahren nach Anspruch 2, **dadurch gekennzeichnet, daß** das Biogas, das in Schritt (a) erzeugt worden ist und in dieser parallelen Erzeugungseinheit verwendet wird, durch einen fossilen Brennstoff wie etwa Erdgas ergänzt wird.

4. Verfahren nach den Ansprüchen 1 bis 3, **dadurch gekennzeichnet, daß** der Schritt (a) der aneroben biologischen Digestion unter mesophilen Bedingungen durchgeführt wird, vorzugsweise bei Temperaturen zwischen 30 und 45°C und bei Verweilzeiten zwischen 10 und 30 Tagen.

5. Verfahren nach den Ansprüchen 1 bis 3, **dadurch gekennzeichnet, daß** der Schritt (a) der aneroben biologischen Digestion unter thermophilen Bedingungen ausgeführt wird, vorzugsweise zwischen 45 und 65°C und bei Verweilzeiten zwischen 8 und 20 Tagen.

6. Verfahren nach den vorangehenden Ansprüchen, **dadurch gekennzeichnet, daß** der Schritt (a) der aneroben biologischen Digestion eine parallele Digestion des Düngers mit anderen Abfallstoffen aus der Landwirtschaft, der Nahrungsmittel- oder der Wasserbehandlungs- oder -verarbeitungsindustrie ist, wie etwa Schlachthausabfälle, Abfälle aus der Herstellung von pflanzlichem Öl, aus der Zucker- und Bierherstellung, von Tierfarmen mit Ausnahme von Schweinefarmen, von der Verarbeitung von Milchprodukten, Obst, Gemüse, Fisch usw., in Mengen im allgemeinen zwischen 0,5 und 30 Gewichtsprozent.

7. Verfahren nach den vorangehenden Ansprüchen, **dadurch gekennzeichnet, daß** es vor Schritt (a) einen zusätzlichen Schritt zum Abtrennen der Feststoffe durch Filtration, Zentrifugierung oder Dekantierung des Düngers umfaßt.

8. Verfahren nach den vorangehenden Ansprüchen, **dadurch gekennzeichnet, daß** die Säure, die dem Destillat, das am Kopf in Schritt c) gesammelt wird, hinzugefügt wird, ausgewählt ist aus Schwefel-, Salpeter- oder Salzsäure.

9. Verfahren nach den vorangehenden Ansprüchen, **dadurch gekennzeichnet, daß** die Base, die vor der Destillation des Schritts (c) hinzugefügt wird, ausgewählt ist von einem Alkali- und einem Erdalkali-Hydroxid, in Mengen im allgemeinen zwischen 0,1 und 1,0 kmol/m³ an Dünger, der der Digestion unterzogen wurde.

10. Verfahren nach den vorangehenden Ansprüchen, **dadurch gekennzeichnet, daß** nach dem Schritt (a) der biologischen Digestion und dem Schritt (b) der Abtrennung der Feststoffe, ein Teil des geklärten flüssigen Düngers, der in Schritt (b) erhalten worden ist, einem Trocknungsverfahren unterzogen wird, daß die folgenden Schritte umfaßt:
(d) Fixierung des Ammoniaks, der in dieser Fraktion des geklärten flüssigen Düngers enthalten ist, durch Versäuerung, vorzugsweise mit Schwefelsäure bei einem pH-Wert zwischen 2 und 7;
(e) Konzentrierung des geklärten flüssigen Düngers, der in Schritt (d) versäuert worden ist, wobei ein Sirup erhalten wird, der vorzugsweise zwischen 10 und 30 Gewichtsprozent Feststoffe enthält; und
(f) Trocknen des Sirups, der in Schritt (e) erhalten worden ist, um ein Pulver mit einem Feuchtigkeitsgehalt im allgemeinen zwischen 1 und 20 Gewichtsprozent zu erhalten.

11. Verfahren nach Anspruch 10, **dadurch gekennzeichnet, daß** das Biogas, das in Schritt (a) erzeugt wird, als Brennstoff in einer parallelen Erzeugungseinheit verwendet wird und durch einen fossilen Brennstoff ergänzt wird, wie etwa Erdgas, um den Bedarf an thermischer und elektrischer Energie sämtlicher Schritte und der parallelen Erzeugung selbst zu decken.

12. Verfahren nach den Ansprüchen 10 und 11, **dadurch gekennzeichnet, daß** die Ammoniaklösung, die nach dem Destillationsschritt (c) erhalten wird, der anderen Fraktion des geklärten Düngers vor dem Schritt (d) des Fixierens von Ammoniak zugesetzt wird; und daß die Feststoffe, die in Schritt (b) abgetrennt werden, dem Sirup, der in Schritt (e) erhalten wird, vor dem Trocknungsschritt (f) zugesetzt werden.

13. Verfahren nach den Ansprüchen 10 bis 12, **dadurch gekennzeichnet, daß** das Pulver, daß in Schritt (f) erhalten wird, agglomeriert wird, um seine Handhabung und Anwendung zu Verbessern, durch Verfahren wie etwa Granulierung und Pelletierung.

## Revendications

1. Procédé pour réduire la charge en polluant de fumiers **caractérisé en ce qu'**il comprend les étapes suivantes :
(a) la biodigestion anaérobie du fumier ; et
(b) la séparation de la matière solide du fumier biodigéré obtenu à l'étape (a) par centrifugation, et
(c) la distillation du fumier liquide clarifié obtenu à l'étape (b), produisant une fraction de distillat entre 2 et 10 % en poids du fumier initial, qui contient la plus grande partie de l'azote provenant du fumier initial sous forme de solution aqueuse d'ammoniaque carbonaté ; ou en variante sous forme de solution de sel d'ammoniaque d'un acide lorsqu'un acide est ajouté au distillat ; ou en variante sous forme de solution d'hydroxyde d'ammonium lorsqu'une base est ajoutée avant la distillation pour obtenir au fond de la colonne de distillation un fumier liquide final ayant une charge en polluant inférieure ;
et **en ce que** le biogaz produit dans la biodigestion de l'étape (a) est utilisé dans une unité de cogénération pour satisfaire les exigences en termes d'énergie thermique et d'énergie électrique de toutes les étapes et de la cogénération elle-même.

2. Procédé selon la revendication 1, **caractérisé en ce que** l'unité de cogénération qui utilise le biogaz produit dans la biodigestion de l'étape (a) comprend au moins un moteur à gaz ou une turbine à gaz couplé à un générateur électrique.

3. Procédé selon la revendication 2, **caractérisé en ce que** le biogaz produit à l'étape (a) et utilisé dans cette unité de cogénération est complété d'un carburant fossile tel que du gaz naturel.

4. Procédé selon les revendications 1 à 3, **caractérisé en ce que** la biodigestion anaérobie de l'étape (a) est réalisée dans des conditions mésophiles, de préférence à des températures comprises entre 30 et 45 °C et avec des temps de rétention compris entre 10 et 30 jours.

5. Procédé selon les revendications 1 à 3, **caractérisé en ce que** la biodigestion anaérobie de l'étape (a) est réalisée dans des conditions thermophiles, de préférence comprises entre 45 et 65 °C et avec des temps de rétention compris entre 8 et 20 jours.

6. Procédé selon les revendications précédentes, **caractérisé en ce que** la biodigestion anaérobie de l'étape (a) est une codigestion du fumier avec d'autres déchets de l'agriculture, de l'industrie alimentaire ou de traitement des eaux, tels que les déchets d'abattoir, les déchets de la fabrication des huiles végétales, de la production du sucre et de la bière, des fermes animales autres que les fermes porcines, du traitement des produits laitiers, des fruits, des légumes, des poissons, etc., dans des quantités généralement comprises entre 0,5 et 30 % en poids.

7. Procédé selon les revendications précédentes, **caractérisé en ce qu'**il comprend, avant l'étape (a), une étape additionnelle pour séparer la matière solide par filtration, centrifugation ou décantation du fumier.

8. Procédé selon les revendications précédentes, **caractérisé en ce que** l'acide ajouté à la tête collectée de distillat à l'étape (c) est choisi parmi les acides sulfurique, nitrique ou chlorhydrique.

9. Procédé selon les revendications précédentes, **caractérisé en ce que** la base ajoutée avant la distillation de l'étape (c) est choisie parmi un hydroxyde alcalin et un hydroxyde alcalino-terreux, dans des quantités variant généralement de 0,1 à 1,0 kmol/m³ de fumier digéré.

10. Procédé selon les revendications précédentes, **caractérisé en ce qu'**après l'étape (a) de biodigestion et l'étape de séparation de la matière solide (b), une fraction du fumier liquide clarifié obtenu à l'étape (b) est soumise à un processus de séchage qui comprend les étapes suivantes :
(d) la fixation de l'ammoniaque contenu dans cette fraction du fumier liquide clarifié par acidification, de préférence avec de l'acide sulfurique à un pH compris entre 2 et 7 ;
(e) la concentration du fumier liquide clarifié acidifié à l'étape (d), obtenant un sirop contenant de préférence entre 10 et 30 % en poids de matière solide ; et
(f) le séchage du sirop obtenu à l'étape (e) pour obtenir une poudre ayant une teneur en humidité généralement comprise entre 1 et 20 % en poids.

11. Procédé selon la revendication 10, **caractérisé en ce que** le biogaz produit à l'étape (a) est utilisé comme combustible dans une unité de cogénération complété par un combustible fossile tel que le gaz naturel pour satisfaire les exigences en termes d'énergie thermique et électrique de toutes les étapes et de la cogénération elle-même.

12. Procédé selon les revendications 10 et 11, **caractérisé en ce que** la solution d'ammoniaque obtenue après l'étape (c) de distillation est ajoutée à l'autre fraction du fumier liquide clarifié avant l'étape (d) de fixation d'ammoniaque ; et **en ce que** la matière solide séparée à l'étape (b) est ajoutée au sirop obtenu à l'étape (e) avant l'étape (f) de séchage.

13. Procédé selon les revendications 10 à 12, **caractérisé en ce que** la poudre obtenue à l'étape (f) est agglomérée pour améliorer sa manipulation et son application par des processus tels que granulation et pastillage.
